# EUROPÄISCHE PATENTSCHRIFT

(11) **EP 3 832 132 B1**
(45) Veröffentlichungstag und Bekanntmachung des Hinweises auf die Patenterteilung: **07.06.2023**
(21) Anmeldenummer: 20208433.1
(22) Anmeldetag: 18.11.2020
(51) Int. Cl.: F03D 80/50, F03D 17/00

(54) **VERFAHRBARE WARTUNGSVORRICHTUNG, VERFAHRBARE MONTAGEVORRICHTUNG UND VERFAHREN**
MOBILE MAINTENANCE DEVICE, MOVABLE MOUNTING DEVICE AND METHOD
DISPOSITIF DE MAINTENANCE MOBILE, DISPOSITIF DE MONTAGE MOBILE ET PROCÉDÉ

(30) Priorität: 06.12.2019 DE 102019133423
(43) Veröffentlichungstag der Anmeldung: 09.06.2021
(73) Patentinhaber: Wobben Properties GmbH, 26607 Aurich (DE)
(72) Erfinder: Schnell, Hendrik, 26605 Aurich (DE); Harms, Harro, 26639 Wiesmoor (DE); Longeru, Markus, 21684 Stade (DE)
(74) Vertreter: Eisenführ Speiser

(56) Entgegenhaltungen:
- CN-B- 105 571 763
- US-A1- 2013 289 769

## Beschreibung

Die Erfindung betrifft eine verfahrbare Wartungsvorrichtung, eine verfahrbare Montagevorrichtung, ein Verfahren zur Wartung eines Befestigungselements und ein Verfahren zur Wartung und/oder Montage eines Befestigungselements eines Flansches eines Windenergieanlagen-Turmes.

Windenergieanlagen sind bekannt, sie erzeugen elektrische Leistung aus Wind. Windenergieanlagen betreffen in der Regel Horizontalachsen-Windenergieanlagen, bei denen die Rotorachse im Wesentlichen horizontal ausgerichtet ist und die Rotorblätter eine im Wesentlichen senkrechte Rotorfläche überstreichen. Windenergieanlagen umfassen neben einem an einer Gondel angeordneten aerodynamischen Rotor einen Turm, auf dem die Gondel mit dem aerodynamischen Rotor um eine im Wesentlichen vertikal ausgerichtete Achse drehbar angeordnet ist.

Der aerodynamische Rotor wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor gekoppelt ist. Der elektrische Generator ist in der Gondel angeordnet und erzeugt elektrische Energie.

Türme von Windenergieanlagen sind in der Regel schlanke Bauwerke mit einer großen Höhe, die insbesondere orthogonal zu dieser Höhe eine vergleichsweise geringe Erstreckung aufweisen. Die Türme werden häufig aus Beton und/oder aus Stahl hergestellt. Die geläufigsten Arten von Türmen für Windenergieanlagen betreffen Betonrohrtürme und/oder Stahlrohrtürme. Häufig sind diese Rohrtürme in vertikaler Richtung und/oder in horizontaler Umfangsrichtung segmentiert, sodass die Rohrtürme zwei oder mehr Turmsegmente umfassen. Die Segmentierung ist erforderlich, um die Türme bzw. Turmsegmente von einer Produktionsstätte zu dem Aufstellort der Windenergieanlage zu transportieren.

Die Turmsegmente weisen üblicherweise horizontale und/oder vertikale Flansche auf. Die horizontalen Flansche sind dafür eingerichtet, vertikal benachbarte Segmente miteinander zu verbinden. Die horizontalen Flansche sind hingegen eingerichtet, um horizontal benachbarte Turmsegmente miteinander zu verbinden. Das Verbinden erfolgt in der Regel mit Befestigungselementen, insbesondere mit Schrauben. Diese Befestigungselemente werden bei der Montage und/oder bei der Wartung montiert und auf ihren richtigen Sitz kontrolliert. In der EP 3 195 974 A1 und in der EP 2 607 685 B1 sind Roboter zur Bewegung entlang eines Flansches beschrieben, wobei diese jedoch nicht zur Wartung von Schrauben geeignet sind. Weiterer Stand der Technik ist in CN 105571763 B und US 2013/289769 A1 offenbart.

Da in einem Turm einer Windenergieanlage in der Regel eine Vielzahl von Befestigungselementen für die Flansche erforderlich ist, ist die Montage und/oder die Wartung zeit- und personalintensiv, sodass die Montage und die Wartung mit einem hohen Kostenaufwand verbunden sind. Darüber hinaus ist die Montage und gegebenenfalls die nachfolgende Kontrolle der Befestigungselemente derart zeitaufwendig, dass der Aufbau der Windenergieanlage langwierig ist und somit auch der Aufbau eines gesamten Windparks zeitaufwendig ist. Darüber hinaus kann die manuelle Montage auch fehleranfällig sein.

Es ist daher eine Aufgabe der vorliegenden Erfindung, eine verfahrbare Wartungsvorrichtung, eine verfahrbare Montagevorrichtung, ein Verfahren zur Wartung eines Befestigungselements und ein Verfahren zur Wartung und/oder Montage eines Befestigungselements eines Flansches eines Windenergieanlagen-Turmes bereitzustellen, die einen oder mehrere der genannten Nachteile vermindern oder beseitigen. Es ist insbesondere eine Aufgabe der vorliegenden Erfindung, eine Lösung bereitzustellen, die eine kostengünstige, insbesondere personalarme und/oder schnelle Montage eines Turmes einer Windenergieanlage ermöglicht.

Gemäß einem ersten Aspekt wird die Aufgabe gelöst durch eine verfahrbare Wartungsvorrichtung für einen Windenergieanlagen-Turm, umfassend eine Bewegungseinheit, die eingerichtet ist, die Wartungsvorrichtung entlang eines Flansches eines Windenergieanlagen-Turmes zu bewegen, eine erste Wartungseinheit mit einem Schlagelement zum Anschlagen eines Befestigungselements, insbesondere eines Flanschverbindungselements, und einer Geräuschempfangseinheit zur Erfassung eines durch das Anschlagen erzeugten Geräusches, eine Steuerungseinheit zur Auswertung der mittels der Geräuschempfangseinheit erfassten Geräusche, die eingerichtet ist, einem Befestigungselement auf Grundlage der Auswertung einen Wartungszustand zuzuordnen.

Der Erfindung liegt die Erkenntnis zugrunde, dass das Anschlagen eines Befestigungselements sowie die Auswertung des damit erzeugten Geräusches wiederkehrende Tätigkeiten bei der Montage eines Turmes einer Windenergieanlage sind. Diese Tätigkeit ist bei der Montage eines Turmes einer Windenergieanlage in der Regel mehrere dutzend Male und regelmäßig mehrere hunderte Male durchzuführen. Die Erfinder haben herausgefunden, dass diese wiederkehrende Tätigkeit mittels einer Wartungsvorrichtung nach dem ersten Aspekt möglich ist. Durch die Kombination einer entsprechend ausgebildeten Bewegungseinheit zum Bewegen der Wartungsvorrichtung entlang des Flansches und einer für die Ausführung des Anschlagens ausgebildete erste Wartungseinheit kann der Montage- und/oder Wartungsaufwand reduziert werden.

Die verfahrbare Wartungsvorrichtung umfasst die Bewegungseinheit zum Bewegen der Wartungsvorrichtung entlang des Flansches des Windenergieanlagen-Turmes. Insbesondere ist die Bewegungseinheit eingerichtet, die Wartungsvorrichtung entlang eines horizontalen Flansches in einer im Wesentlichen horizontalen Richtung zu bewegen. Die horizontalen Flansche von Windenergieanlagen-Türmen ragen üblicherweise radial nach innen in einen von Turmwänden des Windenergieanlagen-Turmes ausgebildeten Hohlraum aus.

Die Flansche weisen ferner üblicherweise eine horizontale Fläche mit Durchgangsöffnungen auf. Diese Öffnungen sind zum Anordnen von Befestigungselementen, insbesondere Schrauben, vorgesehen. Turmsegmente erstrecken sich üblicherweise von einem unteren Flansch hin zu einem oberen Flansch. Der untere Flansch ist im bestimmungsgemäßen Einsatz des Turmsegments dem Fundament zugewandt und der obere Flansch ist im bestimmungsgemäßen Einsatz einem Turmkopf zugewandt.

Der untere Flansch weist üblicherweise eine dem Turmkopf zugewandte obere horizontale Fläche und eine dem Turmfundament zugewandte untere horizontale Fläche auf. Im bestimmungsgemäßen Betrieb liegt die untere horizontale Fläche üblicherweise auf einer oberen horizontalen Fläche eines oberen horizontalen Flansches eines vertikal benachbarten Turmsegments an. Die obere horizontale Fläche des unteren Flansches ist in der Regel geeignet, um auf dieser die verfahrbare Wartungsvorrichtung anzuordnen.

Die Bewegungseinheit ist vorzugsweise eingerichtet, um auf einem horizontalen Flansch, insbesondere auf einer oberen horizontalen Fläche dieses Flansches, eines Windenergieanlagen-Turmes, der Befestigungselemente, insbesondere Schrauben, aufweist, sich zu bewegen.

Die verfahrbare Wartungsvorrichtung umfasst ferner die erste Wartungseinheit. Die erste Wartungseinheit weist ein Schlagelement zum Anschlagen eines Befestigungselements, insbesondere eines Flanschverbindungselements, insbesondere einer Schraube, auf. Das Befestigungselement wird durch das Schlagelement angeschlagen und das entstehende Geräusch kann Aufschluss darüber geben, ob die Schraube einen vorbestimmten Wartungszustand aufweist. Insbesondere kann mittels des Geräusches ermittelt werden, ob das Befestigungselement locker sitzt oder ein Drehmoment anliegt. Um das durch das Anschlagen erzeugte Geräusch zu erfassen, weist die erste Wartungseinheit die Geräuschempfangseinheit auf. Die Geräuschempfangseinheit ist insbesondere eingerichtet, um das Geräusch zu erfassen und vorzugsweise um das Geräusch charakterisierende Daten zu speichern und/oder weiterzuleiten und/oder der Steuerungseinheit bereitzustellen.

Das Schlagelement kann beispielsweise als ein Hammerelement ausgebildet sein. Vorzugsweise weist das Schlagelement einen Schlagkopf und einen Schlagschaft auf.

Die verfahrbare Wartungsvorrichtung weist ferner die Steuerungseinheit auf. Die Steuerungseinheit ist insbesondere eingerichtet, das mittels der Geräuschempfangseinheit erfasste Geräusch auszuwerten. Die Steuerungseinheit ist eingerichtet, um einem Befestigungselement auf Grundlage der Auswertung einen Wartungszustand zuzuordnen. Für diese Zuordnung umfasst die Steuerungseinheit vorzugsweise eine Daten- und/oder Signalverarbeitungseinheit. Der Wartungszustand kann beispielsweise den Wert fest oder locker annehmen. Darüber hinaus kann der Wert des Wartungszustands auch ein anliegendes Drehmoment der Höhe nach charakterisieren, beispielsweise mittels Drehmomentbereichen. Die Steuerungseinheit ist vorzugsweise mit der ersten Wartungseinheit, insbesondere mit der Geräuschempfangseinheit, signaltechnisch gekoppelt. Diese Kopplung kann drahtgebunden und/oder drahtlos ausgebildet sein.

Eine bevorzugte Ausführungsvariante der verfahrbaren Wartungsvorrichtung zeichnet sich dadurch aus, dass diese mindestens eine Führungsschiene zur Führung der Wartungsvorrichtung entlang des Befestigungselements des Flansches umfasst. Die Befestigungselemente am Flansch sind regelmäßig als Schrauben ausgebildet, die einen Schraubenkopf aufweisen. Die entlang des Flansches kreisförmig angeordneten Schrauben können zur Führung der verfahrbaren Wartungsvorrichtung genutzt werden. Zu diesem Zweck weist die verfahrbare Wartungsvorrichtung in dieser bevorzugten Ausführungsvariante die mindestens eine Führungsschiene auf. Die Führungsschiene kann im Betrieb der verfahrbaren Wartungsvorrichtung an mindestens einem Befestigungselement, vorzugsweise an zwei oder mehreren Befestigungselementen, anliegen und somit die verfahrbare Wartungsvorrichtung führen und insbesondere sicher entlang des Flansches mittels der Bewegungseinheit entlangfahren lassen.

Es ist bevorzugt, dass die verfahrbare Wartungsvorrichtung eine innere Führungsschiene und eine äußere Führungsschiene aufweist. Vorzugsweise sind eine innere Führungsschiene und eine äußere Führungsschiene derart angeordnet, dass beim Verfahren der Wartungsvorrichtung entlang des Flansches die innere Führungsschiene auf einer radial innenliegenden Seite der Befestigungselemente und die äußere Führungsschiene auf einer der innenliegenden Seite gegenüberliegenden radial außenliegenden Seite der Befestigungselemente angeordnet ist.

Die innere Führungsschiene und die äußere Führungsschiene sind vorzugsweise derart voneinander beabstandet, dass zwischen diesen mit einer Spielpassung das Befestigungselement anordenbar ist. Durch eine derartige Anordnung der Führungsschienen ist die verfahrbare Wartungsvorrichtung in radialer Richtung geführt. In vertikaler Richtung ist eine Führung der verfahrbaren Wartungsvorrichtung in der Regel nicht erforderlich, da diese auf dem Flansch angeordnet ist. In Umfangsrichtung ist eine Führung dahingehend im Wesentlichen nicht erforderlich, da sich die verfahrbare Wartungsvorrichtung in dieser Richtung mittels der Bewegungseinheit bewegen soll.

Die innere Führungsschiene und die äußere Führungsschiene sind im Betrieb vorzugsweise in radialer Richtung, insbesondere in radialer Turmrichtung, voneinander beabstandet, sodass eine besondere vorteilhafte Führung der Wartungsvorrichtung durch die Befestigungselemente ermöglicht wird.

Die mindestens eine Führungsschiene und/oder die innere Führungsschiene und/oder die äußere Führungsschiene erstrecken sich vorzugsweise von einem ersten Schienenende hin zu einem zweiten Schienenende. Zwischen dem ersten Ende und dem zweiten Ende weisen diese vorzugsweise jeweils einen gekrümmten Verlauf auf, sodass jeweils ein Radius vorliegt. Vorzugsweise entspricht dieser Radius einem Flanschradius, sodass die Führungsschienen dem Verlauf der Befestigungselemente entsprechen.

Ferner vorzugsweise weist die mindestens eine Führungsschiene und/oder die innere Führungsschiene und/oder die äußere Führungsschiene am ersten Ende und/oder am zweiten Ende einen Einführschienenabschnitt, der vorzugsweise trichterförmig ist, auf, der das Einführen eines Befestigungselements zwischen die zwei Führungsschienen verbessert. Im Einführabschnitt ist vorzugsweise die radiale Beabstandung zwischen der inneren und äußeren Führungsschiene vergrößert. Insbesondere ist es bevorzugt, dass dieser Abschnitt der inneren Führungsschiene nach radial innen gewölbt ist und der Abschnitt der äußeren Führungsschiene radial nach außen gewölbt bzw. gekrümmt ist. Dadurch wird ein größerer Einführabschnitt ausgebildet, sodass das Entlangfahren der verfahrbaren Wartungsvorrichtung entlang der Befestigungselemente verbessert wird, da die Befestigungselemente zwischen die Schienen eingeführt werden.

In einer weiteren bevorzugten Fortbildung der verfahrbaren Wartungsvorrichtung ist vorgesehen, dass die Bewegungseinheit mindestens zwei Radelemente aufweist. Die mindestens zwei Radelemente können beispielsweise rotationssymmetrische Scheiben sein, die rotatorisch an der verfahrbaren Wartungsvorrichtung angeordnet sind. Die mindestens zwei Radelemente sind vorzugsweise derart angeordnet und ausgebildet, dass diese die verfahrbare Wartungsvorrichtung auf dem Flansch abstützen und durch eine rotatorische Bewegung die Bewegung der verfahrbaren Wartungsvorrichtung unterstützen oder ermöglichen.

Es ist insbesondere bevorzugt, dass die Bewegungseinheit vier Radelemente aufweist, wobei vorzugsweise zwei Radelemente an gegenüberliegenden Seiten an einem hinteren Ende der Wartungsvorrichtung und zwei weitere Radelemente an zwei gegenüberliegenden Seiten am vorderen Ende der Wartungsvorrichtung angeordnet sind.

In einer weiteren bevorzugten Fortbildung der Wartungsvorrichtung ist vorgesehen, dass die Bewegungseinheit eine Magneteinheit umfasst, die eingerichtet ist, die Wartungsvorrichtung an einer vertikalen Innenumfangsfläche des Flansches entlang dieses Flansches zu bewegen, wobei vorzugsweise die Wartungsvorrichtung eine Trägerstruktur aufweist, der mittels Strukturelementen mit der Magneteinheit gekoppelt ist.

Die Magneteinheit kann auch teilweise oder vollständig an einem benachbarten Flansch angeordnet werden.

Eine derart ausgebildete Bewegungseinheit ermöglicht das Bewegen der verfahrbaren Wartungsvorrichtung auch an solchen Flanschen, an denen eine Bewegung auf dem Flansch nicht möglich oder erschwert möglich ist. Dies kann beispielsweise der Fall sein, wenn in radialer Richtung neben den Befestigungselementen wenig Raum für die Wartungsvorrichtung besteht.

Die Magneteinheit umfasst vorzugsweise einen oder mehrere Elektromagnete, welche einund ausgeschaltet werden und auch als Magnetfüße bezeichnet werden können. Mit Hilfe dieser Magnetfüße kann die Wartungsvorrichtung an den Stirnseiten der Flansche oder oberhalb der Flansche an der Turmwand entlang"laufen". Dies geschieht vorzugsweise, indem jeweils ein Teil der Magnetfüße, beispielsweise 2 von 4 Magnetfüßen, eingeschaltet sind. Die eingeschalteten Magnetfüße haften, während die ausgeschalteten Magnetfüße weiter gesetzt werden. Dann werden die jeweils anderen Magnetfüße eingeschaltet um eine Haftung herzustellen und die ersten Magnetfüße können zum Weiterlaufen ausgeschaltet werden.

Eine weitere bevorzugte Ausführungsvariante der verfahrbaren Wartungsvorrichtung zeichnet sich dadurch aus, dass die Bewegungseinheit eine obere Klemme und/oder untere Klemme aufweist, wobei die obere Klemme ausgebildet ist, auf einer vertikal oberen Seite des Flansches tragend zu wirken und/oder die untere Klemme ausgebildet ist, auf einer vertikal unteren Seite des Flansches und/oder eines benachbarten Flansches tragend zu wirken.

Die Vorgehensweise der Klemmen ist vorzugsweise ähnlich der der MAgnetfüße, jedoch hält sich die Wartungsvorrichtung nicht durch magnetische Kräfte an der Stirnseite des Flansches, sondern hält sich über, vorzugsweise 4, Klemmen fest, die, insbesondere deren Paare, wechselseitig gelöst werden können, um den Flansch entlang zu laufen.

In einer weiteren bevorzugten Fortbildung der verfahrbaren Wartungsvorrichtung ist vorgesehen, dass die Bewegungseinheit eine Antriebseinheit umfasst, die vorzugsweise als ein elektrischer Motor ausgebildet ist. Die Antriebseinheit ist vorzugsweise mit mindestens einem der mindestens zwei Radelementen, vorzugsweise vier Radelementen, gekoppelt. Diese Kopplung kann beispielsweise mechanisch sein. Es ist ferner bevorzugt, dass die Antriebseinheit signaltechnisch mit der Steuerungseinheit gekoppelt ist. Diese signaltechnische Kopplung kann beispielsweise drahtgebunden oder drahtlos ausgebildet sein.

In einer weiteren bevorzugten Fortbildung der verfahrbaren Wartungsvorrichtung ist vorgesehen, dass die Geräuschempfangseinheit als ein Mikrofon ausgebildet ist. Die Geräuschempfangseinheit kann auch als ein Beschleunigungsaufnehmer ausgebildet sein. Ein Beschleunigungsaufnehmer kann beispielsweise Reaktionen, wie Schwingungen oder Impulse, die durch das Schlagelement ausgelöst werden, detektieren.

In einer weiteren bevorzugten Ausführungsvariante der verfahrbaren Wartungsvorrichtung ist vorgesehen, dass diese eine Schnittstelle zum Auslesen des Wartungszustandes umfasst, wobei vorzugsweise die Schnittstelle als eine drahtbasierte Schnittstelle und/oder eine drahtlose Schnittstelle ausgebildet ist. Die Schnittstelle ist insbesondere zum Datenaustausch und/oder zum Datenempfang und/oder zum Datenversand eingerichtet.

Mittels einer solchen Schnittstelle kann der Wartungszustand von Befestigungselementen eines oder mehrerer Flansche ausgelesen werden. Die verfahrbare Wartungsvorrichtung kann somit beispielsweise autonom einen Flansch einer Windenergieanlage abfahren und die Wartungszustände der einzelnen Befestigungselemente ermitteln. Im Anschluss daran kann ein Bediener diese Wartungszustände über die Schnittstelle auslesen. Die drahtlose Schnittstelle hat insofern einen weiteren Vorteil, indem der Bediener bereits während des Wartungsvorgangs die einzelnen Wartungszustände abrufen und entsprechende Maßnahmen ergreifen kann.

Eine weitere bevorzugte Fortbildung der verfahrbaren Wartungsvorrichtung zeichnet sich dadurch aus, dass die Steuerungseinheit eingerichtet ist, die Wartungsvorrichtung durch Ansteuerung der Bewegungseinheit entlang des Flansches zu bewegen, wobei vorzugsweise die Ansteuerung derart erfolgt, dass die Wartungsvorrichtung derart entlang des Flansches bewegt wird, dass ein sukzessives Anschlagen von Befestigungselementen durch das Schlagelement erfolgen kann.

Die verfahrbare Wartungsvorrichtung kann beispielsweise intervallartig bewegt werden. Dies bedeutet insbesondere, dass die Wartungsvorrichtung durch die Bewegungseinheit sich zu einem Befestigungselement bewegt, dort das Anschlagen und die Erfassung des erzeugten Geräusches erfolgt und dann anschließend die Wartungsvorrichtung weiterbewegt wird zum nächsten Befestigungselement. Alternativ kann die verfahrbare Wartungsvorrichtung auch kontinuierlich bewegt werden und das Anschlagen und die Erfassung des erzeugten Geräusches zeitparallel zum Bewegen durchgeführt werden.

Darüber hinaus ist es bevorzugt, dass die Steuerungseinheit eingerichtet ist, den Wartungszustand in einem auslesbaren Speichermedium abzulegen. Insbesondere ist es bevorzugt, dass das Speichermedium mit der Schnittstelle, insbesondere mit der drahtbasierten Schnittstelle und/oder der drahtlosen Schnittstelle, signaltechnisch gekoppelt ist.

In einer weiteren bevorzugten Ausführungsvariante der verfahrbaren Wartungsvorrichtung ist vorgesehen, dass die Steuerungseinheit signaltechnisch mit der ersten Wartungseinheit gekoppelt und eingerichtet ist, ein Schlagsignal zur Ausführung des Anschlagens für die erste Wartungseinheit bereitzustellen und die erste Wartungseinheit eingerichtet ist, bei Empfang des Schlagsignals das Anschlagen des Befestigungselements durchzuführen, und/oder ein von der ersten Wartungseinheit, insbesondere von der Geräuschempfangseinheit, erzeugtes das Geräusch charakterisierendes Geräuschsignal zu empfangen und dieses hinsichtlich eines Wartungszustandes auszuwerten, wobei vorzugsweise der Wartungszustand ein bestimmungsgemäß angeordnetes Befestigungselement, insbesondere eine bestimmungsgemäß befestigte Schraube, repräsentiert oder ein nicht bestimmungsgemäß angeordnetes Befestigungselement, insbesondere eine nicht bestimmungsgemäß befestigte Schraube, repräsentiert.

In einer weiteren bevorzugten Fortbildung der verfahrbaren Wartungsvorrichtung ist vorgesehen, dass diese eine erste Steigeinheit umfasst, die eingerichtet ist, die Montagevorrichtung entlang einer Steigleiter des Windenergieanlagen-Turmes zu bewegen.

Die erste Steigeinheit kann beispielsweise entsprechend der im Folgenden näher erläuterten zweiten Steigeinheit ausgebildet sein. Mittels der ersten Steigeinheit kann sich die verfahrbare Wartungsvorrichtung in vertikaler Richtung nach oben und/oder nach unten im Windenergieanlagen-Turm bewegen. Windenergieanlagen-Türme weisen üblicherweise eine Steigleiter auf, mit der sich ein Nutzer vom Turmfuß in Richtung des Turmkopfes bewegen kann. Üblicherweise sind solche Steigleitern mit ein oder zwei Holmen ausgestattet, wobei die Steigeinheit derart eingerichtet sein kann, dass sich diese entlang des Holms bzw. der Holme bewegen kann.

Gemäß einem zweiten Aspekt wird die eingangs genannte Aufgabe gelöst durch eine verfahrbare Montagevorrichtung für einen Windenergieanlagen-Turm, umfassend eine zweite Steigeinheit, die eingerichtet ist, die Montagevorrichtung entlang einer Steigleiter eines Windenergieanlagen-Turmes, zu bewegen, eine zweite Wartungseinheit mit einem Schlagelement zum Anschlagen eines Befestigungselements und einer Geräuschempfangseinheit zur Erfassung eines durch das Anschlagen erzeugten Geräusches, und eine Steuerungseinheit zur Auswertung der mittels der Geräuschempfangseinheit erfassten Geräusche, die eingerichtet ist, dem Befestigungselement auf Basis des Geräusches einen Wartungszustand zuzuordnen, und eine Montageeinheit mit einem Montagearm zur Positionierung eines Montagewerkzeugs an einem Befestigungselement des Windenergieanlagen-Turmes, wobei das Montagewerkzeug eingerichtet ist, das Befestigungselement zu befestigen. Die verfahrbare Montagevorrichtung umfasst die zweite Steigeinheit und ist entweder mit der zweiten Wartungseinheit oder der Montageeinheit ausgestattet oder umfasst neben der zweiten Steigeinheit die zweite Wartungseinheit und die Montageeinheit.

Die zweite Steigeinheit ist vorzugsweise eingerichtet, um die Montagevorrichtung entlang eines Windenergieanlagen-Turmes, insbesondere entlang einer Steigleiter eines Windenergieanlagen-Turmes, zu bewegen. Die zweite Steigeinheit ist vorzugsweise eingerichtet, um eine kraftschlüssige und/oder formschlüssige Verbindung mit der Steigleiter zu schließen.

Alternativ ist die zweite Steigeinheit vorzugsweise eingerichtet, um die Montagevorrichtung entlang eines Windenergieanlagen-Turmes, zu bewegen, ohne dass hierfür die Steigleiter genutzt wird. Dazu weist die zweite Steigeinheit vorzugsweise Bewegungselemente, wie beispielsweise teleskopierbare Arme mit Steigfüßen und/oder Rollen, auf, mittels derer die Montagevorrichtung entlang des Windenergieanlagen-Turmes bewegt werden kann.

Die zweite Wartungseinheit kann entsprechend der ersten Wartungseinheit ausgebildet sein, insbesondere kann die zweite Wartungseinheit die gleichen Merkmale aufweisen wie die im Vorherigen beschriebene erste Wartungseinheit.

Die Montageeinheit umfasst den Montagearm zur Positionierung eines Montagewerkzeugs an einem Befestigungselement des Windenergieanlagen-Turmes, wobei das Montagewerkzeug eingerichtet ist, das Befestigungselement zu befestigen. In vorteilhafter Weise kann sich die verfahrbare Montagevorrichtung somit entlang der Steigleiter in vertikaler Richtung auf- und abwärts bewegen, und vorzugsweise währenddessen mittels des Montagearms eine Vielzahl von Befestigungselementen des Windenergieanlagen-Turmes erreichen.

Darüber hinaus ist es bevorzugt, dass die Montageeinheit ein Schlagelement zum Anschlagen eines Befestigungselements und eine Geräuschempfangseinheit zur Erfassung eines durch das Anschlagen erzeugten Geräusches umfasst. Die Montageeinheit kann auch ausschließlich das Schlagelement und die Geräuschempfangseinheit umfassen.

In einer bevorzugten Ausführungsvariante der verfahrbaren Montagevorrichtung ist vorgesehen, dass die zweite Steigeinheit eine Klemmvorrichtung zur Anordnung der Montagevorrichtung an der Steigleiter umfasst, wobei vorzugsweise die Klemmvorrichtung eine erste Klemmeinheit und eine zweite Klemmeinheit aufweist.

Die Klemmvorrichtung ist vorzugsweise eingerichtet, um die verfahrbare Montagevorrichtung an der Steigleiter insbesondere in vertikaler Richtung zu fixieren und/oder zu bewegen. Dies bedeutet insbesondere, dass die Klemmvorrichtung die verfahrbare Montagevorrichtung mit der Steigleiter derart koppelt, dass diese in einer definierten vertikalen Position verbleibt oder bewegt wird. Darüber hinaus kann die Klemmvorrichtung einen Antrieb aufweisen, sodass sich die zweite Steigeinheit mit der Klemmvorrichtung in vertikaler Richtung an der Steigleiter aufwärts und/oder abwärts bewegen kann. Die erste Klemmeinheit kann beispielsweise an einem ersten Holm einer Leiter angeordnet werden und die zweite Klemmeinheit kann an einem zweiten Holm der Steigleiter angeordnet werden. Die Holme sind insbesondere außenliegende, im Wesentlichen vertikal ausgerichtete Elemente der Steigleiter, wobei die Holme mit horizontalen Streben in der Regel verbunden sind.

In einer weiteren bevorzugten Ausführungsvariante der verfahrbaren Montagevorrichtung ist vorgesehen, dass die erste Klemmeinheit und die zweite Klemmeinheit jeweils zwei Klemmrollen aufweisen, die an zwei gegenüberliegenden, in radialer Turmrichtung beabstandeten Seiten eines Holms der Steigleiter anordenbar sind, um die Montagevorrichtung in vertikaler Richtung zu fixieren. Vorzugsweise weisen die erste Klemmeinheit und/oder die zweite Klemmeinheit jeweils vier, paarweise in vertikaler Richtung übereinander angeordnete Klemmrollen auf.

Die Klemmrollen können beispielsweise walzenförmig ausgebildet sein. Eine Klemmeinheit umfasst vorzugsweise jeweils zwei Klemmrollen. Diese zwei Klemmrollen greifen vorzugsweise an zwei gegenüberliegenden, in radialerTurmrichtung beabstandeten Seiten des Holms der Steigleiter an. Durch eine entsprechende Anpresskraft zwischen den Klemmrollen kann eine Klemmwirkung erreicht werden. Im Falle, dass jede Klemmeinheit insgesamt vier angeordnete Klemmrollen aufweist, kann die Klemmwirkung weiter verbessert werden. Hierfür ist es bevorzugt, dass jede Klemmeinheit zwei Paare an Klemmrollen aufweist, die vorzugsweise in vertikaler Richtung übereinander angeordnet sind. Die Außenumfangsfläche der Klemmrollen kann beispielsweise aus einem Elastomer bestehen oder dieses umfassen. Insbesondere ist es bevorzugt, dass die Klemmrollen an ihrer Außenumfangsfläche ein Material aufweisen oder umfassen, das einen hohen Reibkoeffizienten mit einer Steigleiter ausbilden kann.

In einer weiteren bevorzugten Fortbildung der verfahrbaren Montagevorrichtung ist vorgesehen, dass die Klemmrollen von einem Antrieb antreibbar sind, um die Montagevorrichtung in vertikaler Richtung entlang der Steigleiter zu bewegen. Die Klemmrollen weisen vorzugsweise jeweils eine Klemmrollenwelle auf. Die Klemmrollenwellen der Klemmrollen sind vorzugsweise mit dem Antrieb gekoppelt. Alternativ kann die verfahrbare Montagevorrichtung auch für jede Klemmrolle oder für jedes Paar an Klemmrollen einen eigenen Antrieb aufweisen. Die Klemmrollen können beispielsweise auch einen integrierten Rollenantrieb aufweisen.

In einer weiteren bevorzugten Fortbildung der verfahrbaren Montagevorrichtung ist vorgesehen, dass diese eine Antriebseinheit aufweist, mit der sich diese in vertikaler Richtung entlang der Steigleiter bewegen kann, wobei diese Antriebseinheit im Wesentlichen nicht antriebstechnisch mit den Klemmrollen gekoppelt ist.

Eine weitere bevorzugte Fortbildung der verfahrbaren Montagevorrichtung zeichnet sich dadurch aus, dass der Montagearm als ein Knickarm ausgebildet ist. Ein als Knickarm ausgebildeter Montagearm hat den Vorteil, dass dieser bei entsprechender Dimensionierung im Wesentlichen alle Befestigungselemente eines Flansches in einem Windenergieanlagen-Turm erreichen kann. Durch den Knickarm, der vorzugsweise mehr als ein, vorzugsweise mehr als zwei, insbesondere mehr als drei Gelenke aufweist, kann der Montagearm mit seinem distalen Ende auch an solche Befestigungselemente gelangen, die beispielsweise hinter anderen Vorrichtungen, beispielsweise internen Montageplattformen oder Kabelsträngen angeordnet sind.

In einer weiteren bevorzugten Ausführungsvariante der verfahrbaren Montagevorrichtung ist vorgesehen, dass das Montagewerkzeug als ein Schraubwerkzeug zur Erzeugung eines Drehmomentes an dem Befestigungselement ausgebildet und/oder das Montagewerkzeug als ein Spannzylinder zur Streckung des Befestigungselements ausgebildet ist.

Beim Aufbau des Turms können die Befestigungselemente von einer temporären Arbeitsbühne im Inneren des Turms aus angeordnet werden und beispielsweise schlagschrauberfest vorgespannt werden. Anschließend kann die temporäre Arbeitsbühne vertikal nach oben im Turm bewegt werden und die nächsten Turmsegmente angeordnet werden und die dort anzubringenden Befestigungselemente werden ebenfalls schlagschrauberfest angeordnet. Die verfahrbare Montagevorrichtung folgt der temporären Arbeitsbühne und führt eine finale Montage der Befestigungselemente aus, wobei diese insbesondere mit einem vorbestimmten Drehmoment beaufschlagt werden.

Durch die Streckung des Befestigungselements ist im Wesentlichen kein Drehmoment bzw. ein geringes Drehmoment zur Anordnung beispielsweise einer Mutter an dem Befestigungselement notwendig. In diesem Fall wird das Befestigungselement durch den Spannzylinder derart gestreckt, dass dieses weiter aus einer Schrauböffnung herauskragt und somit eine Mutter auf das Gewinde des Befestigungselements aufgeschraubt werden kann. Nachdem die Mutter auf das Gewinde aufgeschraubt wurde, kann die Streckung des Befestigungselements durch den Spannzylinder aufgehoben werden und das Befestigungselement sitzt fest.

Möglich ist gemäß einem weiteren Aspekt auch eine Kombination der verfahrbaren Wartungsvorrichtung und der verfahrbaren Montagevorrichtung. Diese Vorrichtung kann die Merkmale der zuvor beschriebenen verfahrbaren Wartungsvorrichtung und die Merkmale der verfahrbaren Montagevorrichtung aufweisen.

Gemäß einem weiteren Aspekt wird die eingangs genannte Aufgabe gelöst durch ein Verfahren zur Wartung eines Befestigungselements eines Flansches eines Windenergieanlagen-Turmes, umfassend die Schritte: Bewegen einer Wartungsvorrichtung nach dem im vorherigen beschriebenen ersten Aspekt, entlang eines Flansches eines Windenergieanlagen-Turmes Anschlagen des Befestigungselements, Erfassung eines durch das Anschlagen erzeugten Geräusches, Auswerten des Geräusches und Zuordnen eines Wartungszustandes zu dem Befestigungselement.

In einer bevorzugten Variante umfasst dieses Verfahren den Schritt: Bewegen der Wartungsvorrichtung in einen Bereich angrenzend an eine Steigleiter des Windenergieanlagen-Turmes, und/oder Bewegen der Wartungsvorrichtung entlang der Steigleiter, vorzugsweise in vertikaler Richtung nach oben.

Gemäß einem weiteren Aspekt wird die eingangs genannte Aufgabe gelöst durch ein Verfahren zur Wartung und/oder Montage eines Befestigungselements eines Flansches eines Windenergieanlagen-Turmes, umfassend die Schritte: Bewegen einer Montagevorrichtung nach dem im vorherigen beschriebenen zweiten Aspekt, entlang einer Steigleiter des Windenergieanlagen-Turmes Anschlagen des Befestigungselements, Erfassung eines durch das Anschlagen erzeugten Geräusches, Auswerten des Geräusches und Zuordnen eines Wartungszustandes zu dem Befestigungselement, und Positionieren eines Montagewerkzeugs an dem Befestigungselement und Befestigen des Befestigungselements.

In einer bevorzugten Ausführungsvariante dieses Verfahrens ist vorgesehen, dass dieses die Schritte umfasst: Anordnen und Vorspannen, insbesondere schlagschrauberfest, des Befestigungselementes mittels eines Montagewerkzeugs, und/oder Bewegen der Montagevorrichtung in vertikaler Richtung nach oben und anschließend Durchführen des Positionierens.

Die Verfahren und ihre möglichen Fortbildungen weisen Merkmale bzw. Verfahrensschritte auf, die sie insbesondere dafür geeignet machen, für eine verfahrbare Wartungsvorrichtung und/oder eine verfahrbare Montagevorrichtung und ihre jeweiligen Fortbildungen verwendet zu werden.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen der verfahrbaren Wartungsvorrichtung und/oder der verfahrbaren Montagevorrichtung verwiesen.

Bevorzugte Ausführungsbeispiele werden exemplarisch anhand der beiliegenden Figuren erläutert. Es zeigen:
- Figur 1:: eine schematische, dreidimensionale Ansicht einer beispielhaften Ausführungsform einer Windenergieanlage;
- Figur 2:: eine schematische, zweidimensionale Ansicht einer verfahrbaren Wartungsvorrichtung;
- Figur 3:: eine schematische, zweidimensionale Ansicht der in Figur 2 gezeigten verfahrbaren Wartungsvorrichtung;
- Figur 4:: eine schematische, zweidimensionale Ansicht einer weiteren beispielhaften Ausführungsform einer verfahrbaren Wartungsvorrichtung;
- Figur 5:: eine schematische, zweidimensionale Ansicht der in Figur 4 gezeigten verfahrbaren Wartungsvorrichtung;
- Figur 6:: eine schematische, zweidimensionale Ansicht einer weiteren beispielhaften Ausführungsform einer verfahrbaren Wartungsvorrichtung;
- Figur 7:: eine schematische, dreidimensionale Ansicht einer beispielhaften Ausführungsform einer verfahrbaren Montagevorrichtung; und
- Figuren 8 - 9:: schematische, beispielhafte Verfahren zur Wartung eines Befestigungselements eines Windenergieanlagen-Turmes;
- Figuren 10 - 11:: schematische, beispielhafte Verfahren zur Wartung und/oder Montage eines Befestigungselements eines Flansches eines Windenergieanlagen-Turmes.

In den Figuren sind gleiche oder im Wesentlichen funktionsgleiche bzw. -ähnliche Elemente mit den gleichen Bezugszeichen bezeichnet.

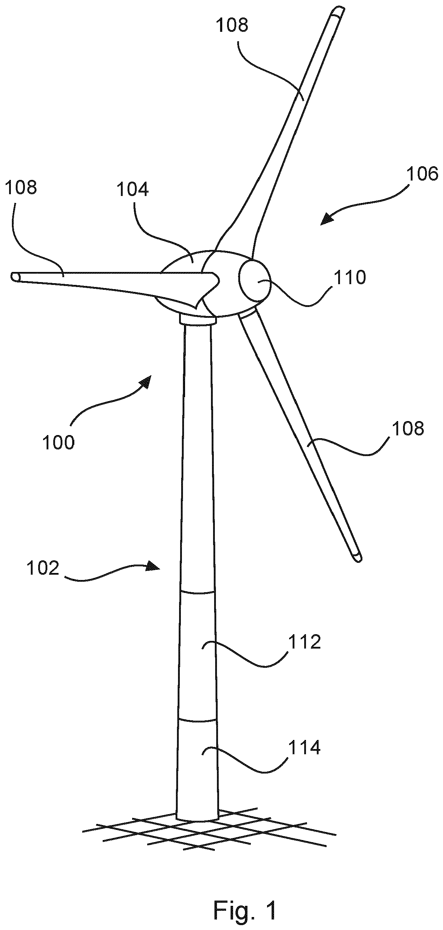

Figur 1 zeigt eine schematische, dreidimensionale Ansicht einer beispielhaften Ausführungsform einer Windenergieanlage 100. Die Windenergieanlage 100 weist einen Turm 102 und eine Gondel 104 auf dem Turm 102 auf. An der Gondel 104 ist ein aerodynamischer Rotor 106 mit Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie.

Der Turm 102 umfasst mindestens zwei Turmsegmente 112, 114, die in vertikaler Richtung voneinander beabstandet sind. Das obere Turmsegment 112 weist zumindest einen unteren Flansch auf. Das untere Turmsegment 114 weist zumindest einen oberen Flansch auf. Der untere Flansch und der obere Flansch liegen bei der montierten Windenergieanlage 100 im Wesentlichen aufeinander auf.

Ferner weisen diese Flansche jeweils Durchgangsöffnungen auf, wobei jeweils eine Durchgangsöffnung des oberen Flansches einer Durchgangsöffnung des unteren Flansches zugeordnet ist, sodass diese eine gemeinsame Durchtrittsachse aufweisen. Durch diese Öffnungen sind Befestigungselemente, insbesondere Schrauben, hindurchgeführt, die die beiden Flansche miteinander verbinden. Durch das Verbinden der Flansche werden die Turmsegmente 112, 114 miteinander verbunden.

Durch die hohe Anzahl an Befestigungselementen je Flanschverbindung ist der Montageaufwand und der Wartungsaufwand und gegebenenfalls auch der Prüfungsaufwand nach der Montage aufwendig. Die Windenergieanlage 100 wurde mit einer verfahrbaren Wartungsvorrichtung 200 montiert. Die verfahrbare Wartungsvorrichtung 200 umfasst eine Bewegungseinheit 210, die eingerichtet ist, die Wartungsvorrichtung 200 entlang des Flansches des Windenergieanlagen-Turmes 102 zu bewegen. Ferner umfasst die verfahrbare Wartungsvorrichtung 200 eine erste Wartungseinheit 230 mit einem Schlagelement 232 zum Anschlagen eines Befestigungselements 4 und einer Geräuschempfangseinheit 234 zur Erfassung eines durch das Anschlagen erzeugten Geräusches.

Darüber hinaus umfasst die verfahrbare Wartungsvorrichtung 200 eine Steuerungseinheit 240 zur Auswertung der mittels der Geräuschempfangseinheit 234 erfassten Geräusche, die eingerichtet ist, einem Befestigungselement 4 auf Grundlage der Auswertung einen Wartungszustand zuzuordnen. Während der Wartung kann sich die Wartungsvorrichtung 200 entlang des Flansches 1 des Turmes 102 bewegen. Danach wird ein Befestigungselement dieses Flansches angeschlagen, dass durch das Anschlagen erzeugte Geräusch wird erfasst und anschließend wird dieses Geräusch ausgewertet, wobei dem Befestigungselement 4 ein Wartungszustand zugeordnet wird.

Ferner wurde bei der Montage des Windenergieanlagen-Turmes 102 eine verfahrbare Montagevorrichtung 300 eingesetzt. Die verfahrbare Montagevorrichtung 300 umfasst eine zweite Steigeinheit 310, die eingerichtet ist, die Montagevorrichtung 300 entlang einer Steigleiter 331 eines Windenergieanlagen-Turmes 102 zu bewegen. Außerdem umfasst die Montagevorrichtung 300 eine zweite Wartungseinheit mit einem Schlagelement 232 zum Anschlagen eines Befestigungselements 4 und einer Geräuschempfangseinheit 234 zur Erfassung eines durch das Anschlagen erzeugten Geräusches, und eine Steuerungseinheit 240 zur Auswertung der mittels der Geräuschempfangseinheit 234 erfassten Geräusche, die eingerichtet ist, dem Befestigungselement auf Basis des Geräusches einen Wartungszustand zuzuordnen. Zusätzlich oder alternativ kann die Montagevorrichtung 300 eine Montageeinheit 340 mit einem Montagearm 342 zur Positionierung eines Montagewerkzeugs 344 an einem Befestigungselement 4 des Windenergieanlagen-Turmes 102, wobei das Montagewerkzeug 344 eingerichtet ist, das Befestigungselement 4 zu befestigen.

Vorzugsweise wurde ein Verfahren zur Wartung und/oder Montage der Befestigungselemente der Flansche des Windenergieanlagen-Turmes 102 eingesetzt, das die folgenden Schritte umfasst: Bewegen einer Montagevorrichtung 300 entlang einer Steigleiter des Windenergieanlagen-Turmes 102, Anschlagen des Befestigungselements 4, Erfassung eines durch das Anschlagen erzeugten Geräusches, Auswerten des Geräusches und Zuordnen eines Wartungszustandes zu dem Befestigungselement 4, und/oder Positionieren eines Montagewerkzeugs an dem Befestigungselement 4 und Befestigen des Befestigungselements 4.

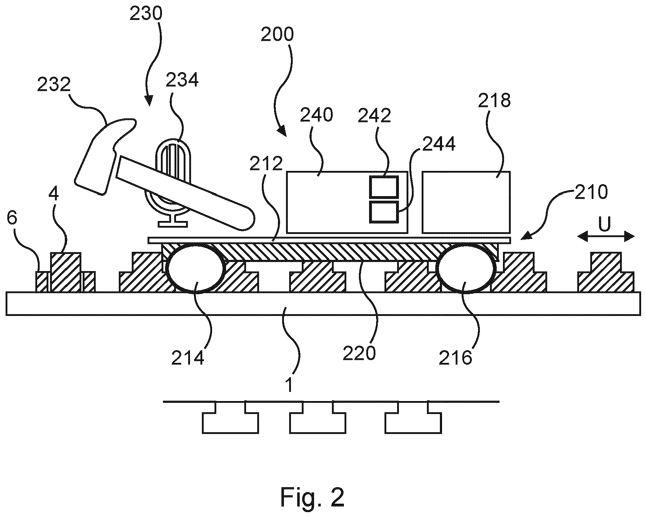

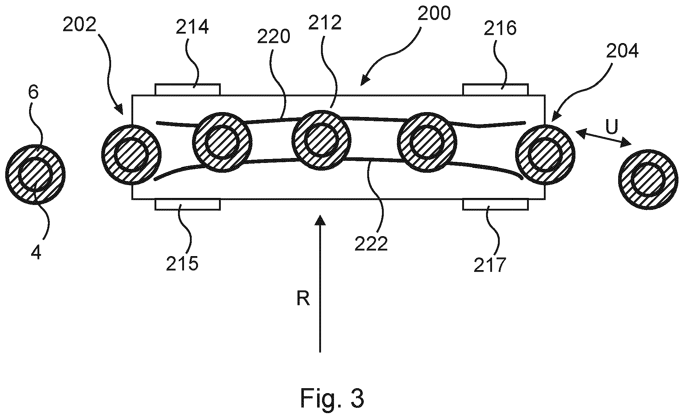

Figur 2 zeigt eine schematische, zweidimensionale Ansicht einer verfahrbaren Wartungsvorrichtung 200. Die Wartungsvorrichtung 200 ist auf einem oberen Flansch 1 eines Turmsegments 112 einer Windenergieanlage 100 angeordnet. Der obere Flansch 1 weist eine Vielzahl an Befestigungselementen 4 auf, die mittels Muttern 6 gesichert sind. Die Wartungsvorrichtung 200 ist auf der oberen Fläche des oberen Flansches 1 angeordnet. Die Wartungsvorrichtung 200 umfasst eine Bewegungseinheit 210. Ferner umfasst die Wartungsvorrichtung 200 ein Trägerelement 212. An dem Trägerelement 212 sind die in Figur 3 gezeigten ersten und zweiten vorderen Radelemente 214, 215 und die ersten und zweiten hinteren Radelemente 216, 217 angeordnet. Ferner umfasst die Bewegungseinheit eine Antriebseinheit 218, die mit mindestens einem der Radelemente 214 - 217 gekoppelt ist. Mittels der Antriebseinheit 218 können die Radelemente 214 - 217 angetrieben werden, sodass sich die Wartungsvorrichtung 200 in Umfangsrichtung U bewegen kann.

Auf einer dem Flansch 1 zugewandten Unterseite des Trägerelements 212 weist dieses eine erste Führungsschiene 220 und eine zweite Führungsschiene 222 auf. Die Führungsschienen 220, 222 sind im Betrieb der Wartungsvorrichtung 200 in radialer Richtung des Turmes voneinander derart beabstandet, dass zwischen diesen ein Befestigungselement 4 und gegebenenfalls auch eine Mutter 6 angeordnet werden können. Insbesondere sind diese derart angeordnet, dass mindestens zwei, vorzugsweise drei, vorzugsweise mehr als drei Befestigungselemente 4 und/oder Muttern 6 zwischen der ersten und zweiten Führungsschiene 220, 222 angeordnet werden können.

Die Wartungsvorrichtung 200 weist ferner die erste Wartungseinheit 230 auf. Die erste Wartungseinheit 230 umfasst das Schlagelement 232 und die Geräuschempfangseinheit 234. Das Schlagelement 232 ist zum Anschlagen der Befestigungselemente 4 eingerichtet. Die Geräuschempfangseinheit 234 ist zur Erfassung eines durch das Anschlagen erzeugten Geräusches eingerichtet. Darüber hinaus umfasst die Wartungsvorrichtung 200 eine Steuerungseinheit 240, die eingerichtet ist, dass mittels der Geräuschempfangseinheit erfasste Geräusch auszuwerten und auf Grundlage dieser Auswertung dem angeschlagenen Befestigungselement einen Wartungszustand zuzuordnen.

Die Wartungsvorrichtung 200 erstreckt sich vorzugsweise von einem ersten Ende 202 hin zu einem zweiten Ende 204. An dem ersten Ende 202 ist die Antriebseinheit 218 angeordnet. An dem zweiten Ende 204 ist die erste Wartungseinheit 230 angeordnet. Zwischen der ersten Wartungseinheit 230 und der Antriebseinheit 218 ist die Steuerungseinheit 240 angeordnet. Das Trägerelement 212 weist eine im Wesentlichen rechteckige Geometrie auf, wobei die Erstreckung von dem ersten Ende 202 hin zum zweiten Ende 204 die Haupterstreckungsrichtung darstellt. Orthogonal zu dieser Haupterstreckung zwischen dem ersten Ende 202 und dem zweiten Ende 204 ist die Drehachse der Radelemente 214 - 217 ausgerichtet. Die Wartungsvorrichtung 200 weist ferner eine Schnittstelle 242 und ein Speichermedium 244 auf.

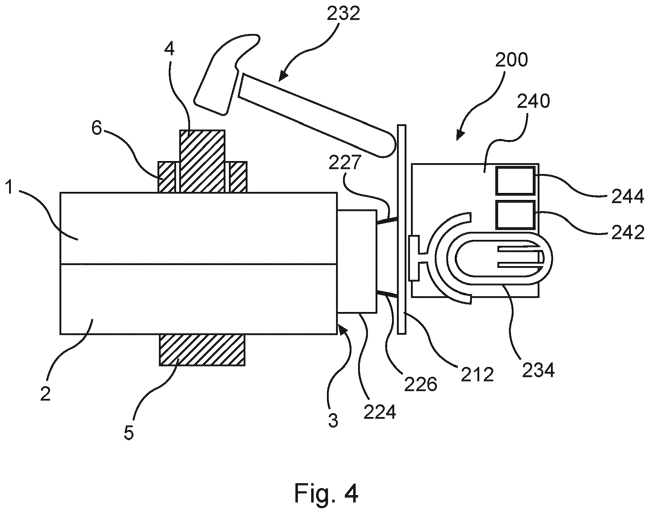

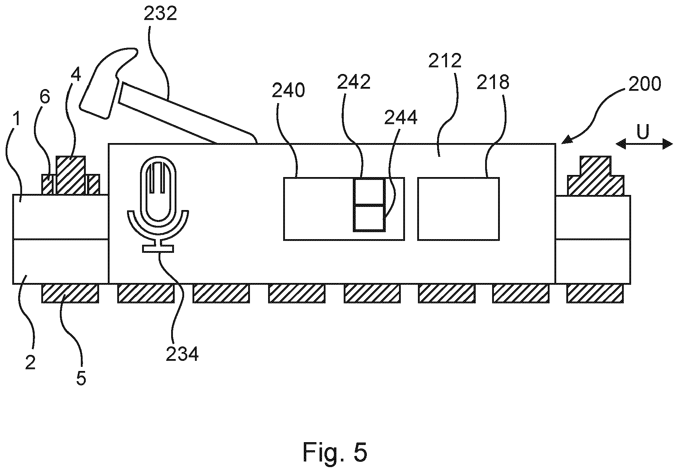

Die Figuren 4 und 5 zeigen eine beispielhafte Ausführungsform einer verfahrbaren Wartungsvorrichtung. Die Bewegungseinheit 210 weist eine Magneteinheit 224 auf. Die Magneteinheit 224 ist eingerichtet, die Wartungsvorrichtung 200 an einer vertikalen Innenumfangsfläche der Flansche 1, 2 entlang dieser Flansche zu bewegen. Die Magneteinheit 224 ist mittels eines ersten Strukturelements 226 und eines zweiten Strukturelements 227 mit dem Trägerelement 212 gekoppelt. Mittels der Magneteinheit 224 kann sich die Wartungsvorrichtung 200 in Umfangsrichtung U entlang der vertikalen Innenumfangsfläche 3 bewegen.

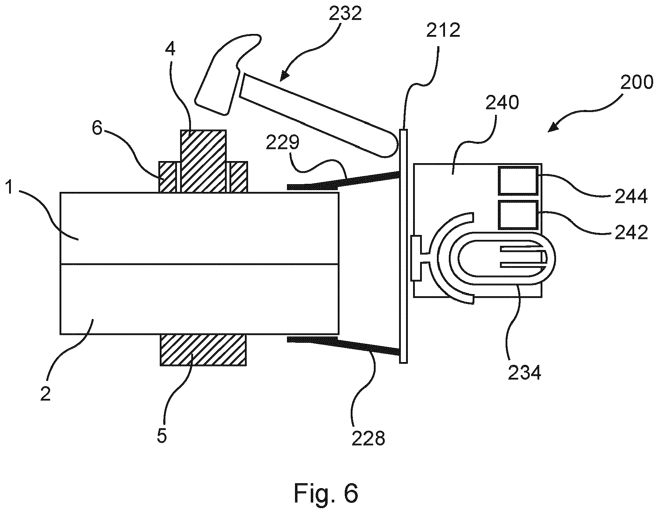

Figur 6 zeigt eine schematische, zweidimensionale Ansicht einer weiteren beispielhaften Ausführungsform einer verfahrbaren Wartungsvorrichtung. Die Wartungsvorrichtung 200 ist über das Trägerelement 212 mittels einer oberen Klemme 229 mit dem oberen Flansch 1 und mittels einer unteren Klemme 228 mit dem unteren Flansch 2 gekoppelt. Mittels der oberen und/oder der unteren Klemme 228, 229 ist eine Bewegung der Wartungsvorrichtung 200 in Umfangsrichtung U möglich.

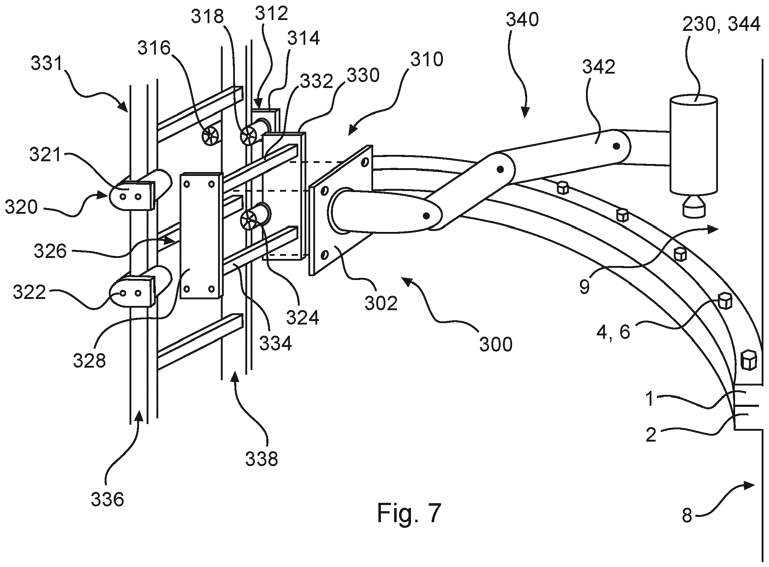

Figur 7 zeigt eine schematische, dreidimensionale Ansicht einer beispielhaften Ausführungsform einer verfahrbaren Montagevorrichtung 300. Die verfahrbare Montagevorrichtung 300 weist eine zweite Steigeinheit 310 auf, die eingerichtet ist, die Montagevorrichtung 300 entlang einer Steigleiter 331 zu bewegen. Ferner umfasst die verfahrbare Montagevorrichtung 300 eine Montageeinheit 340. Die Montageeinheit 340 weist einen als Knickarm ausgebildeten Montagearm 342 und ein Montagewerkzeug 344 auf. Das Montagewerkzeug 344 ist eingerichtet, das Befestigungselement 4, 6 zu befestigen. Alternativ oder ergänzend zum Montagewerkzeug 344 kann die Montagevorrichtung 300 eine zweite Wartungseinheit aufweisen, die analog zur ersten Wartungseinheit 230 ausgebildet sein kann oder ist. Das dem Montagewerkzeug 344 abgewandte Ende des Montagearms 342 weist eine Befestigungsplatte 302 auf, mit der der Montagearm 342 mit einer Kopplungsvorrichtung 326 gekoppelt ist.

Die Kopplungsvorrichtung 326 weist zwei vertikal ausgerichtete Seitenwände 328, 330 auf. Zwischen den Seitenwänden 328, 330 erstreckt sich eine erste Strebe 332 und eine zweite Strebe 334. Die Streben 332, 334 erstrecken sich mit ihrer Haupterstreckungsrichtung im Wesentlichen in horizontaler Richtung. Die Kopplungsvorrichtung 326 ist mit einer ersten Klemmeinheit 312 und einer zweiten Klemmeinheit 320 gekoppelt.

Exemplarisch für die Klemmeinheiten wird im Folgenden die erste Klemmeinheit 312 näher erläutert. Die erste Klemmeinheit 312 weist eine vertikal ausgerichtete Grundplatte 314 auf, die im Wesentlichen flächenparallel zu den Seitenwänden 328, 330 der Kopplungsvorrichtung 326 ausgerichtet sind. Im Bereich jeder Ecke der Grundplatte 314 ist eine Klemmrolle angeordnet, hier zu sehen die erste Klemmrolle 316, die zweite Klemmrolle 318 und die dritte Klemmrolle 324. Die Klemmrollen 316, 318 sind beabstandet in einem Bereich an eine obere Kante der Grundplatte 314 angeordnet. In radialer Richtung sind die Klemmrollen 316, 318 derart beabstandet, dass zwischen diesen der zweite Holm 338 der Steigleiter 331 angeordnet sein kann. Die Streben der Steigleiter erstrecken sich zwischen dem ersten Holm 336 und dem zweiten Holm 338.

Die Montagevorrichtung 300 kann zur Montage und/oder Wartung der Befestigungselemente 4, 6 verwendet werden. Durch den Knickarm 342 der Montageeinheit 340 kann das Montagewerkzeug 344 flexibel innerhalb des Turmes angeordnet und die Befestigungselemente 4, 6 mit dem Montagewerkzeug 344 erreicht werden.

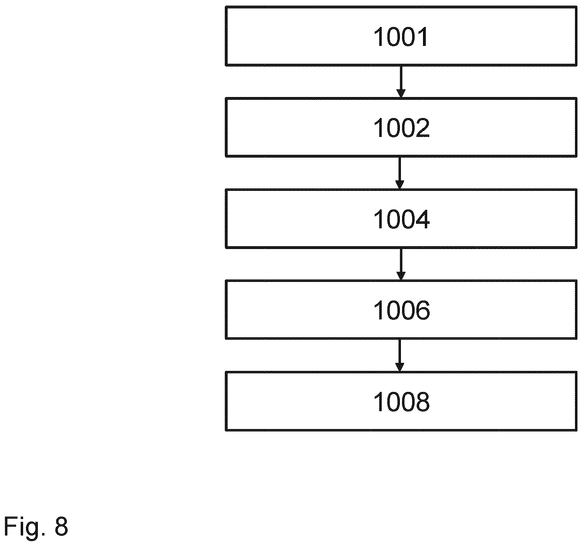

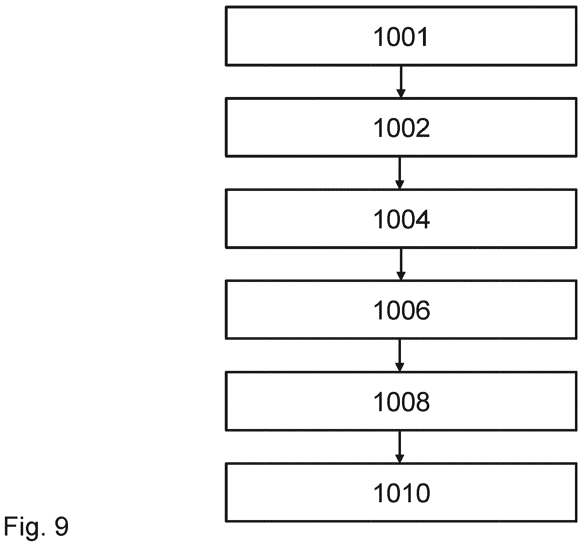

Figur 8 und Figur 9 zeigen schematische, beispielhafte Verfahren zur Wartung eines Befestigungselements eines Windenergieanlagen-Turmes. In einem ersten Schritt 1001 wird die Wartungsvorrichtung 200 entlang eines Flansches 1 eines Windenergieanlagen-Turmes 102 bewegt. In Schritt 1002 wird ein Befestigungselement 4 des Flansches 1 angeschlagen. In Schritt 1004 wird das durch das Anschlagen erzeugte Geräusch erfasst. Das erfasste Geräusch wird in Schritt 1006 ausgewertet. In Schritt 1008 erfolgt auf Basis der Auswertung die Zuordnung eines Wartungszustandes zu dem Befestigungselement 4. Ein Wartungszustand kann beispielsweise den Wert fest, lose oder auch die definierte Angabe eines angezogenen Drehmomentes annehmen.

In Figur 9 ist eine Variante des zuvor beschriebenen Verfahrens gezeigt, hier wird in Schritt 1010 die Wartungsvorrichtung 200 in einem Bereich angrenzend an eine Steigleiter 331 des Windenergieanlagen-Turmes 102 bewegt. In Schritt 1010 wird außerdem die Wartungsvorrichtung 200 entlang der Steigleiter 331 bewegt, vorzugsweise in vertikaler Richtung nach oben. Somit kann die Wartungsvorrichtung 200 von einem Flansch zu einem höher gelegenen Flansch gelangen, ohne dass manuelle Schritte erforderlich werden.

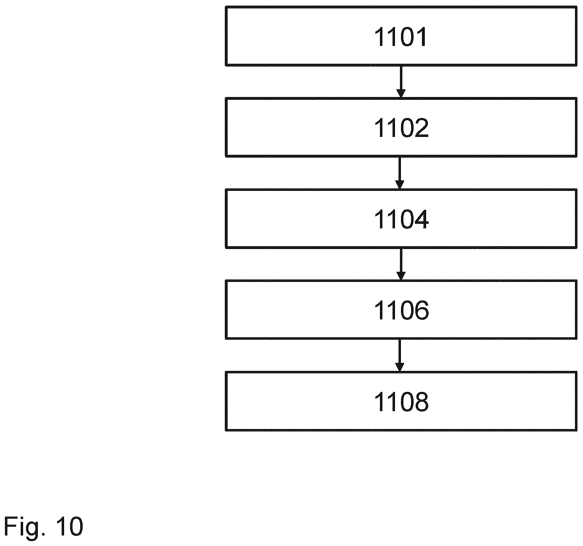

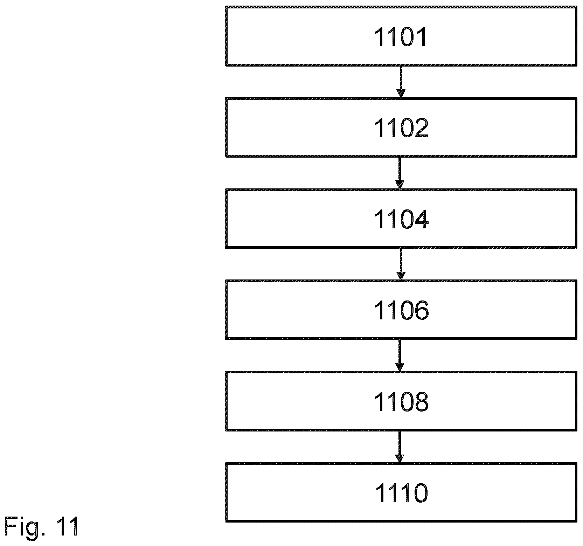

Figur 10 und Figur 11 zeigen schematische, beispielhafte Verfahren zur Wartung und/oder Montage eines Befestigungselements 4, 6 eines Flansches 1 eines Windenergieanlagen-Turmes 102. In Schritt 1101 wird die Montagevorrichtung 300 entlang der Steigleiter 331 des Windenergieanlagen-Turmes 102 bewegt. In Schritt 1102 wird das Befestigungselement 4 angeschlagen. In Schritt 1104 wird das durch das Anschlagen erzeugte Geräusch erfasst. In Schritt 1106 wird dieses Geräusch ausgewertet und dem angeschlagenen Befestigungselement 4, 6 ein Wartungszustand zugeordnet. In Schritt 1108 wird ein Montagewerkzeug 344 an dem Befestigungselement 4, 6 positioniert und das Befestigungselement wird befestigt. Die Schritte 1106 und 1108 können alternativ oder ergänzend zueinander durchgeführt werden.

Das in Figur 11 gezeigte Verfahren ist eine bevorzugte Variante des zuvor beschriebenen Verfahrens, wobei in Schritt 1110 das Befestigungselement 4, 6 mittels eines Montagewerkzeugs 344 vorgespannt wird. Ferner wird in diesem Schritt die Montagevorrichtung 300 in vertikaler Richtung nach oben bewegt und anschließend wird der im Vorherigen beschriebene Schritt des Positionierens durchgeführt.

### BEZUGSZEICHEN

- 1: oberer Flansch
- 2: unterer Flansch
- 3: vertikale Innenumfangsfläche des Flansches
- 4: Befestigungselement
- 5: Kopf
- 6: Mutter
- 8: obere Turmwand
- 9: untere Turmwand
- 100: Windenergieanlage
- 102: Turm
- 104: Gondel
- 106: Rotor
- 108: Rotorblätter
- 110: Spinner
- 200: Wartungsvorrichtung
- 202: erstes Ende
- 204: zweites Ende
- 210: Bewegungseinheit
- 212: Trägerelement
- 214: erstes vorderes Radelement
- 215: zweites vorderes Radelement
- 216: erstes hinteres Radelement
- 217: zweites hinteres Radelement
- 218: Antriebseinheit
- 220: erste Führungsschiene
- 222: zweite Führungsschiene
- 224: Magneteinheit
- 226: erstes Strukturelement
- 227: zweites Strukturelement
- 228: untere Klemme
- 229: obere Klemme
- 230: erste Wartungseinheit
- 232: Schlagelement
- 234: Geräuschempfangseinheit
- 240: Steuerungseinheit
- 242: Schnittstelle
- 244: Speichermedium
- 300: Montagevorrichtung
- 302: Befestigungsplatte
- 310: Steigeinheit
- 312: erste Klemmeinheit
- 314: Grundplatte
- 316: erste Klemmrolle
- 318: zweite Klemmrolle
- 320: zweite Klemmeinheit
- 321: Klemmrolle
- 322: Klemmrolle
- 324: dritte Klemmrolle
- 326: Kopplungsvorrichtung
- 328: erste Seitenwand
- 330: zweite Seitenwand
- 331: Steigleiter
- 332: erste Strebe
- 334: zweite Strebe
- 336: erster Holm
- 338: zweiter Holm
- 340: Montageeinheit
- 342: Montagearm
- 344: Montagewerkzeug

## Patentansprüche

1. Verfahrbare Wartungsvorrichtung (200) für einen Windenergieanlagen-Turm (102), umfassend
- eine Bewegungseinheit (210), die eingerichtet ist, die Wartungsvorrichtung (200) entlang eines Flansches (1,2) des Windenergieanlagen-Turmes (102) zu bewegen,
- eine erste Wartungseinheit (230) mit einem Schlagelement (232) zum Anschlagen eines Befestigungselements (4), insbesondere eines Flanschverbindungselements, und einer Geräuschempfangseinheit (234) zur Erfassung eines durch das Anschlagen erzeugten Geräusches,
- eine Steuerungseinheit (240) zur Auswertung der mittels der Geräuschempfangseinheit (234) erfassten Geräusche, die eingerichtet ist, einem Befestigungselement (4) auf Grundlage der Auswertung einen Wartungszustand zuzuordnen.

2. Verfahrbare Wartungsvorrichtung (200) nach Anspruch 1, umfassend
mindestens eine Führungsschiene (220, 222) zur Führung der Wartungsvorrichtung (200) entlang des Befestigungselements (4) des Flansches, wobei vorzugsweise eine innere Führungsschiene (222) und eine äußere Führungsschiene (220) derart angeordnet sind, dass beim Verfahren der Wartungsvorrichtung (200) entlang des Flansches die innere Führungsschiene (222) auf einer radial innenliegenden Seite der Befestigungselemente (4) und die äußere Führungsschiene (220) auf einer der innenliegenden Seite gegenüberliegenden radial außenliegenden Seite der Befestigungselemente (4) angeordnet ist.

3. Verfahrbare Wartungsvorrichtung (200) nach einem der vorherigen Ansprüche,
- wobei die Bewegungseinheit (210) mindestens zwei Radelemente (214-217) aufweist, und/oder
- wobei die Bewegungseinheit (210) eine Magneteinheit (224) umfasst, die eingerichtet ist, die Wartungsvorrichtung (200) an einer vertikalen Innenumfangsfläche (3) des Flansches entlang dieses Flansches zu bewegen, und vorzugsweise die Wartungsvorrichtung (200) ein Trägerelement (212) aufweist, der mittels Strukturelementen (226, 227) mit der Magneteinheit (224) gekoppelt ist.

4. Verfahrbare Wartungsvorrichtung (200) nach einem der vorherigen Ansprüche, wobei die Bewegungseinheit (210) eine obere Klemme (229) und/oder untere Klemme (228) aufweist, wobei die obere Klemme (229) ausgebildet ist, auf einer vertikal oberen Seite des Flansches tragend zu wirken und/oder die untere Klemme (228) ausgebildet ist, auf einer vertikal unteren Seite des Flansches tragend zu wirken, und/oder
wobei die Bewegungseinheit (210) eine Antriebseinheit (218) umfasst, die vorzugsweise als ein elektrischer Motor ausgebildet ist, und/oder
wobei die Geräuschempfangseinheit (234) als ein Mikrofon ausgebildet ist, und/oder
wobei die Geräuschempfangseinheit (234) als ein Beschleunigungsaufnehmer ausgebildet ist.

5. Verfahrbare Wartungsvorrichtung (200) nach einem der vorherigen Ansprüche,
- umfassend eine Schnittstelle (219) zum Auslesen des Wartungszustandes, wobei vorzugsweise die Schnittstelle (219) als eine drahtbasierte Schnittstelle und/oder eine drahtlose Schnittstelle ausgebildet ist, und/oder
- wobei die Steuerungseinheit (240) eingerichtet ist, die Wartungsvorrichtung (200) durch Ansteuerung der Bewegungseinheit (210) entlang des Flansches zu bewegen, und vorzugsweise die Ansteuerung derart erfolgt, dass die Wartungsvorrichtung (200) derart entlang des Flansches bewegt wird, dass ein sukzessives Anschlagen von Befestigungselementen (4) durch das Schlagelement (232) erfolgen kann, und/oder
- wobei die Steuerungseinheit (240) eingerichtet ist, den Wartungszustand in einem auslesbaren Speichermedium (244) abzulegen.

6. Verfahrbare Wartungsvorrichtung (200) nach einem der vorherigen Ansprüche, wobei
- die Steuerungseinheit (240) signaltechnisch mit der ersten Wartungseinheit (230) gekoppelt und eingerichtet ist, ein Schlagsignal zur Ausführung des Anschlagens für die erste Wartungseinheit (230) bereitzustellen und die erste Wartungseinheit (230) eingerichtet ist, bei Empfang des Schlagsignals das Anschlagen des Befestigungselements (4) durchzuführen, und/oder ein von der ersten Wartungseinheit (230), insbesondere von der Geräuschempfangseinheit (234), erzeugtes das Geräusch charakterisierendes Geräuschsignal zu empfangen und dieses hinsichtlich eines Wartungszustandes auszuwerten, und
- vorzugsweise der Wartungszustand ein bestimmungsgemäß angeordnetes Befestigungselement, insbesondere eine bestimmungsgemäß befestigte Schraube, repräsentiert oder ein nicht bestimmungsgemäß angeordnetes Befestigungselement, insbesondere eine nicht bestimmungsgemäß befestigte Schraube, repräsentiert.

7. Verfahrbare Wartungsvorrichtung (200) nach einem der vorherigen Ansprüche, umfassend eine erste Steigeinheit (310), die eingerichtet ist, die Montagevorrichtung entlang einer Steigleitern (331) des Windenergieanlagen-Turmes (102) zu bewegen.

8. Verfahrbare Montagevorrichtung (300) für einen Windenergieanlagen-Turm (102), umfassend
- eine zweite Steigeinheit (310), die eingerichtet ist, die Montagevorrichtung (300) entlang einer Steigleiter (331) eines Windenergieanlagen-Turmes (102) zu bewegen,
- eine zweite Wartungseinheit mit einem Schlagelement (232) zum Anschlagen eines Befestigungselements (4) und einer Geräuschempfangseinheit (234) zur Erfassung eines durch das Anschlagen erzeugten Geräusches, und eine Steuerungseinheit (240) zur Auswertung der mittels der Geräuschempfangseinheit (234) erfassten Geräusche, die eingerichtet ist, dem Befestigungselement auf Basis des Geräusches einen Wartungszustand zuzuordnen, und
- eine Montageeinheit (340) mit einem Montagearm (342) zur Positionierung eines Montagewerkzeugs (344) an einem Befestigungselement (4) des Windenergieanlagen-Turmes (102), wobei das Montagewerkzeug (344) eingerichtet ist, das Befestigungselement (4) zu befestigen.

9. Verfahrbare Montagevorrichtung (300) nach dem vorherigen Anspruch, wobei
- die zweite Steigeinheit (310) eine Klemmvorrichtung zur Anordnung der Montagevorrichtung (300) an der Steigleiter, und
- vorzugsweise die Klemmvorrichtung eine erste Klemmeinheit (312) und eine zweite Klemmeinheit (320) aufweist.

10. Verfahrbare Montagevorrichtung (300) nach dem vorherigen Anspruch 9, wobei
- die erste Klemmeinheit (312) und die zweite Klemmeinheit (320) jeweils zwei Klemmrollen (316, 318, 321, 322, 324) aufweisen, die an zwei gegenüberliegenden, in radialer Turmrichtung beabstandeten Seiten eines Holms (336, 338) der Steigleiter anordenbar sind, um die Montagevorrichtung (300) in vertikaler Richtung zu fixieren,
- vorzugsweise die erste Klemmeinheit und die zweite Klemmeinheit jeweils vier, paarweise in vertikaler Richtung übereinander angeordnete Klemmrollen (316, 318, 321, 322, 324) aufweisen.

11. Verfahrbare Montagevorrichtung (300) nach dem vorherigen Anspruch 10,
wobei die Klemmrollen von einem Antrieb antreibbar sind, um die Montagevorrichtung (300) in vertikaler Richtung entlang der Steigleiter zu bewegen, und /oder
wobei der Montagearm (342) als ein Knickarm ausgebildet ist, und/oder
wobei das Montagewerkzeug (344) als ein Schraubwerkzeug zur Erzeugung eines Drehmomentes an dem Befestigungselement (4) ausgebildet und/oder das Montagewerkzeug als ein Spannzylinder zur Streckung des Befestigungselements (4) ausgebildet ist.

12. Verfahren zur Wartung eines Befestigungselements (4) eines Flansches eines Windenergieanlagen-Turmes (102), umfassen die Schritte:
- Bewegen einer Wartungsvorrichtung (200) nach einem der Ansprüche 1-7 entlang eines Flansches eines Windenergieanlagen-Turmes (102),
- Anschlagen des Befestigungselements (4), Erfassung eines durch das Anschlagen erzeugten Geräusches, Auswerten des Geräusches und Zuordnen eines Wartungszustandes zu dem Befestigungselement (4).

13. Verfahren nach dem vorherigen Anspruch, umfassend die Schritte:
- Bewegen der Wartungsvorrichtung (200) in einen Bereich angrenzend an eine Steigleiter des Windenergieanlagen-Turmes (102), und/oder
- Bewegen der Wartungsvorrichtung (200) entlang der Steigleiter, vorzugsweise in vertikaler Richtung nach oben.

14. Verfahren zur Wartung und/oder Montage eines Befestigungselements (4) eines Flansches eines Windenergieanlagen-Turmes (102), umfassend die Schritte:
- Bewegen einer Montagevorrichtung (300) nach einem der Ansprüche 8-11 entlang einer Steigleiter des Windenergieanlagen-Turmes (102),
- Anschlagen des Befestigungselements (4), Erfassung eines durch das Anschlagen erzeugten Geräusches, Auswerten des Geräusches und Zuordnen eines Wartungszustandes zu dem Befestigungselement (4), und
- Positionieren eines Montagewerkzeugs an dem Befestigungselement (4) und Befestigen des Befestigungselements (4).

15. Verfahren nach dem vorherigen Anspruch, umfassend die Schritte:
- Anordnen und Vorspannen, insbesondere schlagschrauberfest, des Befestigungselementes mittels eines Montagewerkzeugs (344), und/oder
- Bewegen der Montagevorrichtung (300) in vertikaler Richtung nach oben und anschließend Durchführen des Positionierens.

## Claims

1. A displaceable maintenance device (200) for a wind power installation tower (102); comprising
- a mobile unit (210) which is specified for moving the maintenance device (200) along a flange (1, 2) of the wind power installation tower (102);
- a first maintenance unit (230) having an impact element (232) for impacting a fastening element (4), in particular a flange connection element, and a noise-receiver unit (234) for detecting a noise generated by the impacting;
- a control unit (240) for evaluating the noises detected by means of the noise-receiver unit (234), said control unit (240), based on the evaluation, being specified for assigning a maintenance status to a fastening element (4).

2. The displaceable maintenance device (200) as claimed in claim 1, comprising
at least one guide rail (220, 222) for guiding the maintenance device (200) along the fastening element (4) of the flange, wherein an inner guide rail (222) and an outer guide rail (220) are preferably disposed in such a manner that, when displacing the maintenance device (200) along the flange, the inner guide rail (222) is disposed on a radially inward side of the fastening elements (4), and the outer guide rail (220) is disposed on a radially outward side of the fastening elements (4) that lies opposite the inward side.

3. The displaceable maintenance device (200) as claimed in one of the preceding claims, wherein
the mobile unit (210) has at least two wheel elements (214 - 217), and/or
- wherein the mobile unit (210) comprises a magnetic unit (224) which is specified for moving the maintenance device (200) on a vertical internal circumferential face (3) of the flange along this flange; and the maintenance device (200) preferably has a support element (212) which by means of structural elements (226, 227) is coupled to the magnetic unit (224).

4. The displaceable maintenance device (200) as claimed in one of the preceding claims, wherein
the mobile unit (210) has an upper clamp (229) and/or a lower clamp (228), wherein the upper clamp (229) is configured so as to act in a supporting manner on a vertically upper side of the flange, and/or the lower clamp (228) is configured so as to act in a supporting manner on a vertically lower side of the flange, and/or
wherein the mobile unit (210) comprises a drive unit (218) which is preferably configured as an electric motor, and/or
wherein the noise-receiver unit (234) is configured as a microphone, and/or wherein the noise-receiver unit (234) is configured as an accelerometer.

5. The displaceable maintenance device (200) as claimed in one of the preceding claims,
- comprising an interface (219) for reading the maintenance status, wherein the interface (219) is preferably configured as a wire-based interface and/or a wireless interface, and/or
- wherein the control unit (240) is specified for moving the maintenance device (200) along the flange by actuating the mobile unit (210); and the actuation preferably takes place in such a manner that the maintenance device (200) is moved along the flange in such a manner that successive impacting of fastening elements (4) by the impact element (232) can take place, and/or
- wherein the control unit (240) is specified for storing the maintenance status in a readable storage medium (244)

6. The displaceable maintenance device (200) as claimed in one of the preceding claims, wherein
- the control unit (240) in terms of signaling is coupled to the first maintenance unit (230) and is specified for providing an impact signal for carrying out the impacting for the first maintenance unit (230), and the first maintenance unit (230) when receiving the impact signal is specified for carrying out the impacting of the fastening element (4), and/or for receiving a noise signal which characterizes the noise and is generated by the first maintenance unit (230), in particular by the noise-receiver unit (234), and for evaluating said noise signal in terms of a maintenance status; and
- the maintenance status preferably represents a fastening element that is disposed according to the intended use, in particular a screw that is fastened according to the intended use, or represents a fastening element that is not disposed according to the intended use, in particular a screw that is not fastened according to the intended use.

7. The displaceable maintenance device (200) as claimed in one of the preceding claims, comprising a first climbing unit (310) which is specified for moving the assembly device along a cat ladder (331) of the wind power installation tower (102).

8. A displaceable assembly device (300) for a wind power installation tower (102), comprising
- a second climbing unit (310) which is specified for moving the assembly device (300) along a cat ladder (331) of a wind power installation tower (102);
- a second maintenance unit having an impact element (232) for impacting a fastening element (4), and a noise-receiver unit (234) for detecting a noise generated by the impacting, and a control unit (240) for evaluating the noises detected by means of the noise-receiver unit (234), said control unit (240), on the basis of the noise, being specified for assigning a maintenance status to the fastening element; and
- an assembly unit (340) having an assembly arm (342) for positioning an assembly tool (344) on a fastening element (4) of the wind power installation tower (102), wherein the assembly tool (344) is specified for fastening the fastening element (4).

9. The displaceable assembly device (300) as claimed in the preceding claim, wherein
- the second climbing unit (310) has a clamping device for disposing the assembly device (300) on the cat ladder; and
- the clamping device preferably has a first clamping unit (312) and a second clamping unit (320).

10. The displaceable assembly device (300) as claimed in the preceding claim 9, wherein
- the first clamping unit (312) and the second clamping unit (320) have in each case two clamping rollers (316, 318, 312, 322, 324) which for fixing the assembly device (300) in the vertical direction are able to be disposed on two opposite sides of a strut (336, 338) of the cat ladder that are spaced apart in the radial tower direction;
- the first clamping unit and the second clamping unit preferably have in each case four clamping rollers (316, 318, 3221, 322, 324) that are disposed in pairs on top of one another in the vertical direction.

11. The displaceable assembly device (300) as claimed in the preceding claim 10, wherein
the clamping rollers are able to be driven by a drive so as to move the assembly device (300) in the vertical direction along the cat ladder, and/or
wherein the assembly arm (342) is configured as an articulated arm, and/or
wherein the assembly tool (344) is configured as a screwdriver tool for generating a torque on the fastening element (4), and/or the assembly tool is configured as a tensioning cylinder for stretching the fastening element (4).

12. A method for servicing a fastening element (4) of a flange of a wind power installation tower (102), comprising the following method steps:
- moving a maintenance device (200) as claimed in one of claims 1 to 7, along a flange of a wind power installation tower (102);
- impacting the fastening element (4), detecting a noise generated by the impacting, evaluating the noise, and assigning a maintenance status to the fastening element (4).

13. The method as claimed in the preceding claim, comprising the method steps:
- moving the maintenance device (200) into a region adjacent to a cat ladder of the wind power installation tower (102); and/or
- moving the maintenance device (200) along the cat ladder, preferably upward in the vertical direction.

14. A method for servicing and/or assembling a fastening element (4) of a flange of a wind power installation tower (102), comprising the following method steps:
- moving an assembly device (300) as claimed in one of claims 8 to 11, along a cat ladder of the wind power installation tower (102);
- impacting the fastening element (4), detecting a noise generated by the impacting, evaluating the noise, and assigning a maintenance status to the fastening element (4); and
- positioning an assembly tool on the fastening element (4) and fastening the fastening element (4).

15. The method as claimed in the preceding claim, comprising the following method steps:
- disposing and pre-tensioning, in particular so as to be impact-driver tight, the fastening element by means of an assembly tool (344); and/or
- moving the assembly device (300) upward in the vertical direction, and subsequently carrying out the positioning.

## Revendications

1. Dispositif de maintenance (200) mobile pour un mât d'éolienne (102), comprenant
- une unité de déplacement (210), qui est mise au point pour déplacer le dispositif de maintenance (200) le long d'un flasque (1, 2) du mât d'éolienne (102),
- une première unité de maintenance (230) avec un élément de percussion (232) destiné à percuter un élément de fixation (4), en particulier un élément de raccordement à flasque, et avec une unité de réception de bruit (234) destinée à détecter un bruit généré par la percussion,
- une unité de commande (240) destinée à évaluer les bruits détectés au moyen de l'unité de réception de bruit (234), qui est mise au point pour associer un état de maintenance à un élément de fixation (4) sur la base de l'évaluation.

2. Dispositif de maintenance (200) mobile selon la revendication 1, comprenant
au moins un rail de guidage (220, 222) destiné à guider le dispositif de maintenance (200) le long de l'élément de fixation (4) du flasque, dans lequel de préférence un rail de guidage intérieur (222) et un rail de guidage extérieur (220) sont disposés de telle manière que, lors du déplacement du dispositif de maintenance (200) le long du flasque, le rail de guidage intérieur (222) est disposé sur un côté situé radialement vers l'intérieur des éléments de fixation (4) et le rail de guidage extérieur (220) est disposé sur un côté des éléments de fixation (4) situé à l'extérieur radialement faisant face au côté situé à l'intérieur.

3. Dispositif de maintenance (200) mobile selon l'une quelconque des revendications précédentes,
- dans lequel l'unité de déplacement (210) présente au moins deux éléments de roue (214 - 217), et/ou
- dans lequel l'unité de déplacement (210) comprend une unité magnétique (224), qui est mise au point pour déplacer le dispositif de maintenance (200) sur une surface périphérique intérieure verticale (3) du flasque le long dudit flasque, et de préférence le dispositif de maintenance (200) présente un élément de support (212), qui est couplé à l'unité magnétique (224) au moyen d'éléments de structure (226, 227).

4. Dispositif de maintenance (200) mobile selon l'une quelconque des revendications précédentes,
dans lequel l'unité de déplacement (210) présente une bride de serrage supérieure (229) et/ou une bride de serrage inférieure (228), dans lequel la bride de serrage supérieure (229) est réalisée pour agir avec une action de support sur un côté verticalement supérieur du flasque et/ou la bride de serrage inférieure (228) est réalisée pour agir avec une action de support sur un côté verticalement inférieur du flasque, et/ou
dans lequel l'unité de déplacement (210) comprend une unité d'entraînement (218), qui est réalisée de préférence en tant qu'un moteur électrique, et/ou
dans lequel l'unité de réception de bruit (234) est réalisée en tant qu'un microphone, et/ou
dans lequel l'unité de réception de bruit (234) est réalisée en tant qu'une sonde d'accélération.

5. Dispositif de maintenance (200) mobile selon l'une quelconque des revendications précédentes,
- comprenant une interface (219) destinée à lire l'état de maintenance, dans lequel de préférence l'interface (219) est réalisée en tant qu'une interface filaire et/ou une interface sans fil, et/ou
- dans lequel l'unité de commande (240) est mise au point pour déplacer le dispositif de maintenance (200) en pilotant l'unité de déplacement (210) le long du flasque, et de préférence le pilotage est effectué de telle manière que le dispositif de maintenance (200) est déplacé de telle manière le long du flasque qu'une percussion successive d'éléments de fixation (4) peut avoir lieu par l'élément de percussion (232), et/ou
- dans lequel l'unité de commande (240) est mise au point pour enregistrer l'état de maintenance dans un support de stockage (244) lisible.

6. Dispositif de maintenance (200) mobile selon l'une quelconque des revendications précédentes,
dans lequel
- l'unité de commande (240) est couplée par une technique de signaux à la première unité de maintenance (230) et est mise au point pour fournir un signal de percussion pour exécuter la percussion pour la première unité de maintenance (230) et la première unité de maintenance (230) est mise au point pour mettre en oeuvre, à réception du signal de percussion la percussion de l'élément de fixation (4), et/ou pour recevoir un signal de bruit caractérisant le bruit, généré par la première unité de maintenance (230), en particulier par l'unité de réception de bruit (234) et pour évaluer celui-ci quant à un état de maintenance, et
- de préférence l'état de maintenance représente un élément de fixation disposé conformément à l'usage prévu, en particulier une vis fixée conformément à l'usage prévu ou représente un élément de fixation non disposé conformément à l'usage prévu, en particulier une vis non fixée conformément à l'usage prévu.

7. Dispositif de maintenance (200) mobile selon l'une quelconque des revendications précédentes, comprenant une première unité pour monter (310), qui est mise au point pour déplacer le dispositif de montage le long d'une échelle (331) du mât d'éolienne (102).

8. Dispositif de montage (300) mobile pour un mât d'éolienne (102), comprenant
- une deuxième unité pour monter (310), qui est mise au point pour déplacer le dispositif de montage (300) le long d'une échelle (331) d'un mât d'éolienne (102),
- une deuxième unité de maintenance avec un élément de percussion (232) destiné à percuter un élément de fixation (4) et une unité de réception de bruit (234) destinée à détecter un bruit généré par la percussion, et une unité de commande (240) destinée à évaluer les bruits détectés au moyen de l'unité de réception de bruit (234), qui est mise au point pour associer un état de maintenance à l'élément de fixation sur la base du bruit, et
- une unité de montage (340) avec un bras de montage (342) pour positionner un outil de montage (344) sur un élément de fixation (4) du mât d'éolienne (102), dans lequel l'outil de montage (344) est mis au point pour fixer l'élément de fixation (4).

9. Dispositif de montage (300) mobile selon la revendication précédente, dans lequel
- la deuxième unité pour monter (310) présente un dispositif de serrage destiné à disposer le dispositif de montage (300) sur l'échelle, et
- de préférence le dispositif de serrage présente une première unité de serrage (312) et une deuxième unité de serrage (320).

10. Dispositif de montage (300) mobile selon la revendication 9 précédente, dans lequel
- la première unité de serrage (312) et la deuxième unité de serrage (320) présentent respectivement deux rouleaux de serrage (316, 318, 321, 322, 324), qui peuvent être disposés sur deux côtés, se faisant face, tenus à distance dans le sens radial du mât, d'un montant (336, 338) de l'échelle pour bloquer le dispositif de montage (300) dans le sens vertical,
- de préférence la première unité de serrage et la deuxième unité de serrage présentent respectivement quatre rouleaux de serrage (316, 318, 321, 322, 324) disposés par paire les uns au-dessus des autres dans le sens vertical.

11. Dispositif de montage (300) mobile selon la revendication 10 précédente,
dans lequel les rouleaux de serrage peuvent être entraînés par un entraînement pour déplacer le dispositif de montage (300) dans le sens vertical le long de l'échelle, et/ou
dans lequel le bras de montage (342) est réalisé en tant qu'un bras coudé, et/ou
dans lequel l'outil de montage (344) est réalisé en tant qu'un outil de vissage pour générer un couple de rotation sur l'élément de fixation (4) et/ou l'outil de montage est réalisé en tant qu'un cylindre de mise en tension pour étirer l'élément de fixation (4).

12. Procédé de maintenance d'un élément de fixation (4) d'un flasque d'un mât d'éolienne (102), comprenant les étapes :
- de déplacement d'un dispositif de maintenance (200) selon l'une quelconque des revendications 1 - 7 le long d'un flasque d'un mât d'éolienne (102),
- de percussion de l'élément de fixation (4), de détection d'un bruit généré par la percussion, d'évaluation du bruit et d'association d'un état de maintenance à l'élément de fixation (4).

13. Procédé selon la revendication précédente, comprenant les étapes :
- de déplacement du dispositif de maintenance (200) dans une zone jouxtant une échelle du mât d'éolienne (102), et/ou
- de déplacement du dispositif de maintenance (200) le long de l'échelle, de préférence vers le haut dans le sens vertical.

14. Procédé de maintenance et/ou de montage d'un élément de fixation (4) d'un flasque d'un mât d'éolienne (102), comprenant les étapes :
- de déplacement d'un dispositif de montage (300) selon l'une quelconque des revendications 8 - 11 le long d'une échelle du mât d'éolienne (102),
- de percussion de l'élément de fixation (4), de détection d'un bruit généré par la percussion, d'évaluation du bruit et d'association d'un état de maintenance à l'élément de fixation (4), et
- de positionnement d'un outil de montage sur l'élément de fixation (4) et de fixation de l'élément de fixation (4).

15. Procédé selon la revendication précédente, comprenant les étapes :
- de disposition et de précontrainte, en particulier de manière solidaire à la visseuse à percussion, de l'élément de fixation au moyen d'un outil de montage (344), et/ou
- de déplacement du dispositif de montage (300) vers le haut dans le sens vertical puis de mise en œuvre du positionnement.
